Europäisches Patentamt

European Patent Office

Office européen des brevets

(11) Veröffentlichungsnummer: **0 280 770 B1**

# EUROPÄISCHE PATENTSCHRIFT

(45) Veröffentlichungstag der Patentschrift: 26.06.91

(51) Int. Cl.⁵: **G21F 9/34**

(21) Anmeldenummer: 87116830.8

(22) Anmeldetag: 14.11.87

(54) **Verfahren zur Konditionierung von trockenen bioschädlichen Abfällen.**

(30) Priorität: 19.12.86 DE 3643464

(43) Veröffentlichungstag der Anmeldung:
07.09.88 Patentblatt 88/36

(45) Bekanntmachung des Hinweises auf die
Patenterteilung:
26.06.91 Patentblatt 91/26

(84) Benannte Vertragsstaaten:
**CH DE ES LI SE**

(56) Entgegenhaltungen:
**FR-A- 1 333 345**
**FR-A- 2 006 907**
**FR-A- 2 307 342**
**US-A- 4 582 638**

(73) Patentinhaber: **Nukem GmbH**
**Rodenbacher Chaussee 6 Postfach 11 00 80**
**W-6450 Hanau 11(DE)**

(72) Erfinder: **Christ, Bernhard, Dr.**
**Schwalbenstrasse 22**
**W-6090 Rüsselsheim(DE)**
Erfinder: **Neupert, Daniel, Dr.**
**Rannenbergring 47**
**W-8755 Alzenau(DE)**
Erfinder: **Demtröder, Peter**
**Im Bangert 21 b**
**W-6140 Bensheim-Auerbach(DE)**

EP 0 280 770 B1

Rank Xerox (UK) Business Services

## Beschreibung

Die Erfindung betrifft ein Verfahren zur Konditionierung von trockenen bioschädlichen Abfällen, insbesondere von radioaktiv kontaminierten Abfällen, durch Einbinden in Gemischen aus hydraulischen Bindemitteln und Wasser.

Beim Betrieb in kerntechnischen Anlagen, Labors oder chemischen Produktionsstätten fallen bioschädliche Abfälle an. Beispiele für solche Abfälle sind radioaktiv kontaminierter metallischer Schrott, mineralische Isolier- oder Baumaterialien, ferner Filterstoffe. Es kann sich aber auch um feste Reststoffe handeln, die bei der Verbrennung, Veraschung oder Pyrolyse von radioaktiv kontaminierten Abfällen oder von Chemieabfällen anfallen.

Um eine Gefährdung der Umwelt durch derartige Abfälle zu verhindern, ist es notwendig, sie in sicherer Form zu deponieren, wobei in der Regel vor der eigentlichen Deponierung ein Konditionierungsschritt vorangeht. Art der Konditionierung bzw. die Auswahl des Konditionierungsverfahrens richten sich nach bestimmten charakteristischen Merkmalen der Abfälle.

Das derzeitige Konzept der Abfallkonditionierung in Deutschland basiert zu einem wesentlichen Teil auf der Zementierung radioaktiver Abfälle, insbesondere der mittelaktiven Abfälle. Hierbei ist man bestrebt, das Volumen des konditionierten Abfalls möglichst klein zu halten. Nichtbrennbare Abfälle, insbesondere sperrige Abfälle versucht man deshalb durch Pressen in eine kompakte Form zu überführen.

Brennbare radioaktiv kontaminierte Abfälle werden zur Volumenreduzierung verbrannt oder verascht, so daß lediglich der feste Ascherückstand und/oder die Schlacke zurückbleiben, die einer Konditionierung zugeführt werden. Die Grenzen der Volumenverminderung bei der Konditionierung sind dort erreicht, wo die Qualitätsanforderungen an das Endprodukt keine höhere Beladung an Abfall in der jeweiligen Matrix zulassen, was zu Anstrengungen dahingehend führt, die Matrix-Eigenschaften zu optimieren und den Abfallstoff in die möglichst dichteste Form zu überführen.

Dazu werden die kontaminierten Abfälle gemeinsam mit einem Bindemittel, wie beispielsweise Zement verpreßt. Damit wird erreicht, daß z.B. eine porige Struktur des Abfallstoffes zerstört und die Porosität des Bindemittels minimiert werden. Folge davon ist, daß bei gleicher Abfallbehandlung die Matrixeigenschaften (Auslaugeverhalten, Festigkeit usw.) besser werden, so daß bei festgeschriebenen Qualitätsanforderungen an das Konditionierungsprodukt letztendlich höhere Abfallbeladungen möglich sind (-J.G. Moore, G.C. Rogers, S. Katz, M.T. Morgan Fuetap concretes-tailored autoclared concretes for the fixation of radioactive wastes; Proc.

Symp. Waste Manage 1981, 1, 267-276 -D.M.Roy, G.R. Gouda; High-Level Radioactive Waste Incorporation into Special Cements; Nuclear Technology, Vol. 40, Sept. 1978, 214-219).

Werden hydraulisch erhärtende Bindemittel zur Abfallkonditionierung verwendet, setzt der Abbindeprozeß sofort nach der Zugabe des Anmachwassers ein, so daß Mischvorgang und Erhärtungsprozeß unmittelbar zeitlich aufeinander folgen. Dies ist insbesondere dann von Nachteil, wenn nach dem Mischen ein Preßvorgang angeschlossen werden soll, weil beide Verfahrensschritte zeitlich nicht mehr unabhängig voneinander durchgeführt werden können. Das bedeutet, daß ein späterer Preßvorgang Tage oder Wochen nach der Vermischung nicht mehr möglich ist. Dadurch ergeben sich für das konditionierte Gut Qualitätseinbußen. Sogenannte Abbindeverzögerer, die nur über einige Stunden wirksam sind, bringen keine Verbesserungen.

In der DE-OS 25 15 795 wird ein Verfahren zur Behandlung radioaktiver Konzentrate beschrieben, wobei die flüssigen Konzentrate soweit entwässert werden, daß nach Zumischen von Bindemitteln durch Aushärten die Konzentrate in eine feste Form überführt werden. In einer besonderen Ausgestaltung dieses Verfahrens wird das Bindemittel portionsweise, verpackt in kleinere Bindemittelbehälter, zu dem zu verfestigenden Abfall zugegeben. Die Bindemittelbehälter werden dann beim Mischen mechanisch zerstört. Die mechanische Zerstörung dieser Behälter erfolgt entweder mit einem Rührorgan oder bei Verzicht eines Rührers durch Zugabe von Fallkörpern (Flintsteine) in das Faß, so daß beim Rotieren des Faßes die Bindemittelbehälter aufgebrochen werden. Auch bei diesem Verfahren setzt der Abbindeprozeß unmittelbar nach dem Mischen ein. Desweiteren muß in Kauf genommen werden, daß infolge der Konsistenz der feuchten Mischung durch Rühren keine ausreichende Homogenität des Endprodukts erzielt werden kann. Ein späteres Nachverdichten ist nicht mehr möglich.

Der vorliegenden Erfindung liegt daher die Aufgabe zu Grunde, ein Verfahren zur Konditionierung von trockenen bioschädlichen, insbesondere von radioaktiv kontaminierten Abfällen durch Einbinden in hydaulische Bindemittel und Wasser zu finden, das eine beliebige zeitliche Trennung zwischen dem Mischen und dem hydaulischen Abbindeprozess mit späterer Nachverdichtung ermöglicht, dadurch die mechanischen und die Auslaugeigenschaften des verfestigten Materials verbessert und ferner eine effektivere und wirtschaftliche Abfallbehandlung gestattet.

Die Aufgabe wird erfindungsgemäß dadurch gelöst, daß das für das Abbinden des hydraulischen Bindemittels notwendige Wasser dem trockenen Gemisch aus zu konditionierendem Abfall und hydaulischem Bindemittel in mehreren dicht geschlossenen Behältnissen zugegeben wird, die erst unter Anwendung von äußerem mechanischem Druck zerstört werden und das Wasser freigeben.

Auf diese Weise wird der Mischvorgang zeitlich vom hydraulischen Abbindevorgang entkoppelt. Es können daher an verschiedenen Orten, an denen Abfälle anfallen, Behälter mit Abfall, hydraulischem Bindemittel und mit Wasserbehältnissen versehen und lose gemischt werden, die Behälter mit dem Gemisch an eine zentrale Stelle transportiert und dort unter verdichtendem Pressen zum Abbinden und Aushärten gebracht werden. Porositäten im festen ausgehärteten Block werden vermieden, die mechanische Festigkeit erhöht und zudem ein effektiver Arbeitsablauf und damit gute Wirtschaftlichkeit erreicht.

Die durch Pressen zerstörbaren Behältnisse, die das Wasser enthalten, müssen ausreichend stabil sein, um nicht schon beim Mischen mit dem hydraulischen Bindemittel und dem kontaminierten Abfall zerstört zu werden. Es kommen dafür die unterschiedlichsten Behältnisse infrage. Als geeignet haben sich sogenannte Plastikkissen erwiesen, ähnlich wie sie auch zum Verpacken von Haarshampoo verwendet werden.

Eine weitere Variante sind mehrkammerige Kunststoffbeutel, wie man sie zur Herstellung von Eiskugeln in Gefrierschränken kennt. Als Materialien für diese Behälter haben sich vor allem Polyethylen, Polyvinylchlorid oder mit Aluminiumfolie kaschierte Polyethylenfolien bewährt. Das Material der Behältnisse ist aber nicht nur auf Kunststoffe beschränkt. Es können ebenso Glasflaschen für diesen Zweck verwendet werden.

Besonders günstig ist es, wenn die mit Wasser gefüllten Behältnisse aus metallischen Dosen bestehen, die auch bei sehr rauhem Betrieb zuverlässig dicht bleiben, jedoch beim Pressen leicht aufplatzen und das Wasser freigeben.

Die maximale Größe der einzelnen Behältnisse richtet sich nach der Chargengröße der zu konditionierenden Abfälle. Erfahrungsgemäß genügt es in vielen Fällen für eine ausreichend homogene Verteilung des Anmachwassers in der Mischung nach dem Pressen, wenn das benötigte Anmachwasser auf mindestens 10 etwa gleichgröße Behältnisse aufgeteilt ist.

Das Mischen der wassergefüllten Behältnisse mit den festen Abfällen und dem hydraulischen Bindemittel wird vorteilhafterweise in einem Taumelmischer vorgenommen, weil damit die Gefahr, daß beim Mischvorgang einzelne Behälter zerstört werden, weitgehend ausgeschlossen ist. Günstig ist es, eine Mischung aus festem Abfall und hydraulischem Bindemittel protionsweise in ein Abfallgebinde einzufüllen und schichtweise die mit Wasser gefüllten Behältnisse dazuzugeben, so daß sich ein sandwichartiger Aubau der Mischung ergibt.

Vorzugsweise wird das Mischen im Abfallgebinde direkt vorgenommen.

Wenn es sich bei dem Abfallgebinde um einen dünnwandigen metallischen Behälter, wie z.B. um eine Blechtrommel handelt, kann diese zusammen mit dem Inhalt zusammengepresst werden, so daß daraus ein Preßling entsteht, dessen Inneres aus konditioniertem Abfall besteht. Ein so hergestellter Preßling hat eine ausreichende Eigenstabilität, so daß er sofort nach dem Preßvorgang auch gehandhabt oder transportiert werden kann.

Als hydraulische Bindemittel können geeignete Zemente oder fallweise auch Gips verwendet werden. Als besonders günstig hat sich die Verwendung schnell härtender Zemente herausgestellt, da diese in kurzer Zeit ein hohe Festigkeit erreichen.

Die Menge an benötigtem Anmachwasser richtet sich ausschließlich nach dem chemischen Wasserbedarf des Bindemittels. Eine darüberhinausgehende Zugabe an Anmachwasser ist nicht erwünscht und auch unnötig, weil nach dem Pressen und der Freigabe des Wassers aus den zerstörten Behältnissen kein Verarbeitungsschritt wie Mischen oder Fördern mehr folgt und damit das Fließverhalten der Mischung ohne Belang ist. Desweiteren werden bei hohen Preßdrucken die freien Poren in der Mischung - und damit auch im Endprodukt - so klein, daß das gesamte Anmachwasser für den Abbindevorgang zur Verfügung steht.

Anstatt der Verwendung von reinem Wasser als Anmachwasser ist es in manchen Fällen vorteilhaft,bereits mit Schadstoffen belastetes Wasser zu verwenden. Auf diese Weise wird eine zusätzliche Entsorgungsmöglichkeit für belastete Abwässer geschaffen, die eine gesonderte aufwendige Entsorgung erübrigt.

## Ansprüche

1. Verfahren zur Konditionierung von trockenen bioschädlichen, insbesondere radioaktiv kontaminierten, Abfällen, durch Einbinden in Gemische aus hydraulischen Bindemitteln und Wasser, dadurch gekennzeichnet, daß das für das Abbinden des hydraulischen Bindemittels notwendige Wasser dem trockenen Gemisch aus zu konditionierendem Abfall und hydraulischem Bindemittel in mehreren dicht geschlossenen Behältnissen zugegeben wird, die erst unter Anwendung von äußerem mechanischem Druck zerstört werden und das Wasser freigeben.

2. Verfahren nach Anspruch 1, dadurch gekennzeichnet, daß die Abfälle, das hydraulische Bindemittel und die mit Wasser gefüllten Behältnisse in einem metallischen Behälter gemischt, oder als Mischung in einen metallischen Behälter eingefüllt und mit diesem zusammen verpresst werden.

3. Verfahren nach den Ansprüchen 1 und 2, dadurch gekennzeichnet, daß die mit Wasser gefüllten Behältnisse vor dem Verpressen schichtweise zwischen der Mischung aus Abfall und hydraulischem Bindemittel verteilt werden.

4. Verfahren nach den Ansprüchen 1 bis 3, dadurch gekennzeichnet, daß das Wasser in den geschlossenen Behältnissen bereits bioschädliche Stoffe enthält.

5. Verfahren nach den Ansprüchen 1 bis 4, dadurch gekennzeichnet, daß als hydraulisches Bindemittel schnellhärtender Zement verwendet wird.

**Claims**

1. A process for conditioning dry biologically harmful waste, more particularly radioactive waste, by binding in mixtures of hydraulic binders and water, characterized in that the water required for the setting of the hydraulic binder is added to the dry mixture of waste to be conditioned and hydraulic binder in several tightly sealed containers which are only destroyed by application of external mechanical pressure so that the water is released.

2. A process as claimed in claim 1, characterized in that the waste, the hydraulic binder and the water-filled containers are mixed in a metal container or are introduced in admixture into, and compressed with, a metal container.

3. A process as claimed in claims 1 and 2, characterized in that, before compression, the water-filled containers are distributed in layers between the mixture of waste and hydraulic binder.

4. A process as claimed in claims 1 to 3, characterized in that the water in the sealed containers already contains biologically harmful material.

5. A process as claimed in claims 1 to 4, characterized in that quick-setting cement is used as the hydraulic binder.

**Revendications**

1. Procédé pour le conditionnement de déchets secs, biologiquement nocifs, en particulier à contamination radioactive, par enrobage dans des mélanges de liants hydrauliques et d'eau, caractérisé en ce que l'eau requise pour la prise du liant hydraulique est ajoutée au mélange sec constitué du déchet à conditionner et de liant hydraulique, dans plusieurs contenants fermés de façon étanche, qui ne sont détruits que sous l'application d'une pression mécanique externe et libèrent l'eau.

2. Procédé selon la revendication 1, caractérisé en ce que les déchets, le liant hydraulique et les contenants remplis d'eau sont mélangés dans un récipient métallique ou sont introduits sous forme de mélange dans un récipient métallique et comprimés ensemble avec celui-ci.

3. Procédé selon les revendications 1 et 2, caractérisé en ce que, avant la compression, les contenants remplis d'eau sont répartis en couche entre le mélange constitué de déchet et de liant hydraulique.

4. Procédé selon l'une quelconque des revendications 1 à 3, caractérisé en ce que l'eau dans les contenants fermés contient déjà des substances biologiquement nocives.

5. Procédé selon l'une quelconque des revendications 1 à 4, caractérisé en ce que, en tant que liant hydraulique, on utilise du ciment à prise rapide.